(19) **Europäisches Patentamt**
**European Patent Office**
**Office européen des brevets**

(11) **EP 4 245 801 A1**

(12) **EUROPEAN PATENT APPLICATION**

(43) Date of publication:
**20.09.2023 Bulletin 2023/38**

(21) Application number: **22216704.1**

(22) Date of filing: **27.12.2022**

(51) International Patent Classification (IPC):
**C08J 9/16** (2006.01)  **B29C 44/44** (2006.01)
**B32B 5/18** (2006.01)  **C08J 9/232** (2006.01)
**C08J 9/236** (2006.01)  **C08J 9/18** (2006.01)
**B32B 5/24** (2006.01)  C08J 9/12 (2006.01)

(52) Cooperative Patent Classification (CPC):
**C08J 9/232; B29C 44/3461; C08J 9/18;**
**C08J 9/236;** B29C 44/445; C08J 9/122;
C08J 2203/06; C08J 2377/00

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.03.2022 JP 2022040346**

(71) Applicant: **JSP Corporation**
**Tokyo 100-0005 (JP)**

(72) Inventors:
• **HAYASHI, Tatsuya**
**Mie, 510-0881 (JP)**
• **YAMANAKA, Ryo**
**Mie, 510-0881 (JP)**
• **SUENAGA, Katsuyuki**
**Mie, 510-0881 (JP)**

(74) Representative: **Mai Besier**
**European Trademark Attorneys**
**Patentanwälte**
**Kreuzberger Ring 18a**
**65205 Wiesbaden (DE)**

(54) **USE OF POLYAMIDE-BASED RESIN EXPANDED BEADS FOR PRODUCING A FIBER-REINFORCED COMPOSITE ARTICLE, AND NOVEL FIBER-REINFORCED COMPOSITE ARTICLE**

(57)    Use of polyamide-based resin expanded beads having a specific cell wall thickness and a specific crystallite size for forming a fiber-reinforced composite article constituted of a composite skin and a core that is bonded to the skin and that includes the polyamide-based resin expanded beads which are bonded together.

EP 4 245 801 A1

**Description**

Technical Field

The present invention generally relates to polyamide-based resin expanded beads for producing a fiber-reinforced composite article and, more specifically, to use of polyamide-based resin expanded beads for producing a fiber-reinforced composite article.

Background Art

A polyamide-based resin is known as a resin having high heat resistance, excellent in abrasion resistance and chemical resistance. An expanded molded body made by causing the polyamide-based resin to expand achieves weight saving while maintaining the excellent properties, so that use of such a molded body for automobile parts and the like may be expected.

Accordingly, various studies on an expanded molded body of polyamide-based resin have been performed for implementation in various applications.

As one such application, German patent publication DE102017116896A1 discloses a fiber-reinforced composite material having a core material of a foamed polyamide resin and a fiber-containing skin material disposed on a surface of the core material. The foamed polyamide resin has a crystallite size of 10 nm or more and crystallinity of 10 to 50%. As the foamed polyamide resin, the German document discloses use of a molded body obtained by in mold molding of polyamide pre-expanded particles. The molded body is obtained by a two-step steam heating method in which the pre-expanded particles are heated at a temperature of (Tf - 20°C) to (Tf - 2°C) for 2 to 20 seconds (first step) and then at a temperature of higher than Tf to (Tf + 15°C) for 10 to 60 seconds (second step), where Tf is a fusion temperature of the polyamide pre-expanded particles, to fusion-bond the pre-expanded particles and to grow the crystals of the pre-expanded particles. Thus, the required crystallite size of 10 nm or more and crystallinity of 10 to 50% of the foamed polyamide resin (namely molded body) are attained by the two-step heating of the polyamide pre-expanded particles.

In an in-mold molding method in which expanded beads in a mold cavity are heated with steam to mutually fusion-bond the expanded beads, it has been hitherto difficult to heat the entire expanded beads uniformly. This is the case when the steam heating is performed not only to fusion-bond the expanded beads but also to grow the crystal size and crystallinity of the molded product. Thus, especially when an intended molded product has a large thickness and/or a complicated shape, variations in heat resistance and mechanical strength such as compressive strength are inevitably caused, because crystal size is not uniformly grown throughout the molded product. Besides, moldability of the molded product is apt to become worse.

Summary of Invention

With the above problems in view, the present invention is aimed at the provision of polyamide-based resin expanded beads capable of giving a molded body which has excellent heat resistance, excellent solvent resistance, uniform physical properties such as compressive strength and little variation in physical properties and which is suited for producing a fiber-reinforced composite article constituted of a core formed from the expanded beads and a composite skin bonded to an outer surface of the core and containing a resin and fibers. It is an important objective problem of the present invention to provide use of the above polyamide-based resin expanded beads to produce a fiber-reinforced composite article that has a core and a composite skin bonded to the core and that exhibits little variations in mechanical property and in heat resistance and shows excellent dimensional stability. The present invention is also aimed at the provision of a method for producing such a fiber-reinforced composite article.

In accordance with one aspect of the present invention there is provided:

Use of polyamide-based resin expanded beads for producing a fiber-reinforced composite article that comprises a core, and a skin bonded to at least part of an outer surface of the core and including a fiber-reinforced resin,

wherein the core comprises the polyamide-based resin expanded beads that are bonded together, and
wherein the polyamide-based resin expanded beads have a cell wall thickness of 5 $\mu$m or more and 80 $\mu$m or less and a crystallite size of more than 10 nm as measured by an X-ray diffraction method.

The present invention also provides the following uses [2] to [10]:

[2] The use according to above [1], wherein the polyamide-based resin expanded beads have a crystallite size of more than 12 nm as measured by an X-ray diffraction method.
[3] The use according to above [1] or [2], wherein the polyamide-based resin expanded beads have a cell wall

thickness of 7 μm or more and 80 μm or less.

[4] The use according to any one of above [1] to [3], wherein the polyamide-based resin expanded beads have a total heat of fusion of 40 to 140 J/g as determined from a first heating DSC curve measured in accordance with JIS K7122-1987 by heat-flux differential scanning calorimetry in which a sample of the polyamide-based resin expanded beads is heated at a heating rate of 10°C/min from 30°C to a temperature higher by 30°C than a melting end temperature.

[5] The use according to any one of above [1] to [4], wherein the polyamide-based resin expanded bead have a peak top temperature of a melting peak of 185 to 285°C as determined from a second heating DSC curve measured in accordance with JIS K7121-1987 by heat-flux differential scanning calorimetry in which a sample of the polyamide-based resin expanded beads is heated at a heating rate of 10°C/min from 30°C to a first temperature higher by 30°C than a melting end temperature, then maintained at the first temperature for 10 minutes, then cooled to 30°C at a cooling rate of 10°C/min and then heated again at a heating rate of 10°C/min to a second temperature higher by 30°C than a melting peak end temperature.

[6] The use according to any one of above [1] to [5], wherein the polyamide-based resin expanded beads have an apparent density higher than $0.01$ g/cm$^3$ and lower than $0.3$ g/cm$^3$.

[7] The use according to any one of above [1] to [6], wherein the polyamide-based resin expanded beads have a closed cell content of 85% or more.

[8] The use according to any one of above [1] to [7], wherein the polyamide-based resin expanded beads have an average cell diameter of 200 μm or more and 400 μm or less.

[9] The use according to any one of above [1] to [8], wherein the polyamide-based resin expanded beads are fusion-bonded together to form a molded body as the core.

[10] The use according to any one of above [1] to [8], wherein the polyamide-based resin expanded beads are bonded together with a thermoplastic or thermosetting resin to form a molded body as the core.

In a further aspect of the present invention, there are provided the following method:

A method for producing a fiber-reinforced composite article, comprising processing a core precursor, reinforcing fibers and a thermoplastic or thermosetting resin in a mold, said core precursor being either (a) a plurality of polyamide-based resin expanded beads having a cell wall thickness of 5 μm or more and 80 μm or less and a crystallite size of more than 10 nm as measured by an X-ray diffraction method or (b) a molded body including a plurality of said polyamide-based resin expanded beads that are bonded together,

to form a core which includes the molded body when the core precursor is (b) or which includes a molded product in which a plurality of the polyamide-based resin expanded beads are bonded together when the core precursor is (a), and

to form a skin bonded to an outer surface of the core and including the thermoplastic or thermosetting resin that is cured and impregnated into the reinforcing fibers.

The present invention also provides:

[12] The method according to above [11], wherein the reinforcing fibers and the thermoplastic or thermosetting resin are in the form of a prepreg.

[13] The method according to above [11] or [12], wherein the molded body as the core precursor (b) has interstices formed between the polyamide-based resin expanded beads so that the thermoplastic or thermosetting resin is also impregnated into the interstices during said processing.

[14] The method according to any one of above [11] to [13], wherein, in the molded body as the core precursor (b), the polyamide-based resin expanded beads are fusion-bonded together or bonded together with the thermoplastic or thermosetting resin serving as an adhesive.

[15] The method according to above [11], wherein the plurality of said polyamide-based resin expanded beads in the molded product are bonded together with the thermoplastic or thermosetting resin serving as an adhesive.

[16] The method according to any one of above [11] to [13], wherein the thermoplastic or thermosetting resin is a curable liquid composition so that the thermoplastic or thermosetting resin is impregnated into the reinforcing fibers and/or gaps between the core precursor and the reinforcing fibers during said processing.

[17] The method according to any one of above [11] to [13], wherein, in the molded body as the core precursor (b), the polyamide-based resin expanded beads are each double-coated with an inner, thermosetting or thermoplastic resin coating and an outer, reinforcing fiber coating.

[18] The method according to any one of above [11] to [17], wherein said processing includes heating under pressure.

The present invention further provides:

The method according to any one of above [11] to [18], wherein the polyamide-based resin expanded beads are those which are recited in any one of above [2] to [8].

Effect of the Invention

The polyamide-based resin expanded beads of the present invention, which have specific crystallite size and specific cell wall thickness, have excellent heat resistance and excellent physical properties such as compressive strength. Further, the polyamide-based resin expanded beads have excellent in-mold moldability and permit the production of an in-mold molded body having excellent heat resistance without need of multi-step heating as required in the aforementioned German document. Thus, the molded body obtained has excellent heat resistance, excellent resistance to compressive deformation and little variations in mechanical properties such as compressive strength. Additionally, when such molded bodies are continuously produced, mechanical property and heat resistance variations between the products are small. Thus, the polyamide-based resin expanded beads of the present invention are suitably used for producing a fiber-reinforced composite article constituted of a core of the expanded beads and a resin-impregnated fiber skin bonded to the core. The fiber-reinforced composite article produced by using the polyamide-based resin expanded beads of the present invention has little variations in mechanical property and in heat resistance and shows excellent dimensional stability.

Description of Embodiments

The present invention relates to an expanded bead comprising a polyamide-based resin. The expanded bead is suited to form a core in a fiber-reinforced composite article that is constituted of the core and a resin-impregnated fiber skin bonded to at least a part of the core. The expanded bead comprising a polyamide-based resin will be hereinafter also referred to as "polyamide-based resin expanded bead" or simply as "expanded bead". In the specification and claims, the singular form (a, an, the) includes the plural form unless the context clearly indicates otherwise. Thus, for example, "an expanded bead" is intended to include "two or more expanded beads". In the specification and claims, the numerical range "X to Y" is intended to include the lower limit "X" and the upper limit "Y", and is therefore synonymous with "X or more and Y or less".

The polyamide-based resin expanded bead is composed of a base resin containing a polyamide-based resin and has a plurality of cells defined by cell walls constituted of the base resin. Examples of the polyamide-based resin include a polyamide and a polyamide copolymer, and a polyamide copolymer is preferred. As used herein, the term "base resin" is intended to mean any polymer, resin or composition thereof that is capable of forming expanded beads having a plurality of cells defined by cell walls.

Examples of the polyamide include a homopolymer such as a poly(6-aminohexanoic acid) that is also known as poly(caprolactam) (polycaproamide, nylon 6), a poly(laurolactam) (nylon 12), a poly(hexamethylene adipamide) (nylon 66), a poly(7-aminoheptanoic acid) (nylon 7), a poly(8-aminooctanoic acid) (nylon 8), a poly(9-aminononanoic acid) (nylon 9), a poly(10-aminodecanoic acid) (nylon 10), a poly(11-aminoundecanoic acid) (nylon 11), a poly(hexamethylene sebacamide) (nylon 610), a poly(decamethylene sebacamide) (nylon 1010), a poly(hexamethylene azelamide) (nylon 69), a poly(tetramethylene adipamide) (nylon 46), a poly(tetramethylene sebacamide) (nylon 410), a poly(pentamethylene adipamide) (nylon 56) and a poly(pentamethylene sebacamide) (nylon 510). The polyamide copolymer refers to a copolymer having two or more repeating units, with at least a part of the repeating units each having an amide bond. Examples of the polyamide copolymer include a caprolactam/hexamethylene diaminoadipic acid copolymer (nylon 6/66), a caprolactam/hexamethylene diaminoadipic acid/lauryllactam copolymer (nylon 6/66/12), and a caprolactam/lauryllactam copolymer (nylon 6/12). As the polyamide-based resin, the polyamides and the polyamide copolymers may be used singly or in combinations of two or more thereof. From the viewpoint of easily obtaining polyamide-based resin expanded beads having a large crystallite size, among the polyamide-based resins, a polyamide-based resin made of one or two or more in combination selected from the group consisting of nylon 6, nylon 66 and nylon 6/66 is preferred, and nylon 6/66 is more preferred.

Although the polyamide copolymer may be a block copolymer including a combination of a sequence of a certain quantity of the same repeating unit of amide and a sequence of a certain quantity of a different amide, or a random copolymer including different amides each randomly repeating, a random copolymer is preferred. If the polyamide copolymer is a random copolymer, in-mold molding of the polyamide-based resin expanded beads is able to be performed under a relatively low forming steam pressure.

The melting point (Tm) of the polyamide-based resin is preferably 185°C to 285°C, more preferably 188°C to 280°C, still more preferably 190°C to 260°C, yet still more preferably 215°C to 250°C, particularly preferably 220°C to 240°C. All upper limits and lower limits disclosed herein may be combined to define preferred ranges. Thus, for example, the melting points of 185°C to 260°C, 190°C to 280°C, 190°C to 250°C, 215°C to 260°C, 220°C to 250°C are also preferred melting point ranges. With the polyamide-based resin satisfying the range of the above melting point, polyamide-based resin expanded beads having a low apparent density, excellent in heat resistance tends to be favorably obtained. When a polyamide-based resin is made of a single kind of a polyamide-based resin, the melting point of polyamide-based resin refers to the melting point of the polyamide-based resin. When the polyamide-based resin is made of a mixture of two or more polyamide-based resins, or a mixture of a polyamide-based resin and another thermoplastic resin, the melting point of a polyamide-based resin refers to the melting point of the mixture kneaded with an extruder in advance.

The melting point (Tm) of the polyamide-based resin is a value determined as the peak top temperature of a melting peak as determined from a second heating DSC curve measured in accordance with JIS K7121-1987 by heat-flux differential scanning calorimetry in which a sample of the polyamide-based resin is heated at a heating rate of 10°C/min from 30°C to a first temperature higher by 30°C than a melting end temperature, then maintained at the first temperature for 10 minutes, then cooled to 30°C at a cooling rate of 10°C/min and then heated again at a heating rate of 10°C/min to a second temperature higher by 30°C than a melting peak end temperature. When the DSC curve has a plurality of melting peaks, the peak top temperature of a melting peak having the largest area is adopted as the melting temperature. Before the DSC measurement, the sample is allowed to quiescently stand in an environment at 23°C and humidity of 50% for 24 hours.

The preferably has a flexural modulus of 1000 MPa or more, more preferably 1200 MPa or more, still more preferably 1500 MPa or more. Having a flexural modulus in the above range, the polyamide-based resin hardly contracts even when exposed to room temperature after having been expansion, so that expanded beads having a low apparent density (high expansion ratio) may be easily obtained. Also, because of the high flexural modulus, a molded body obtained from the polyamide-based resin hardly deforms after having been molded and has excellent in-mold formability. The upper limit of the flexural modulus of the polyamide-based resin is generally about 3000 MPa. The flexural modulus of a polyamide-based resin is able to be obtained by measurement in accordance with JIS K7171: 2016 after the test piece is left standing at a temperature of 23°C and a relative humidity of 50% for 24 hours.

The polyamide-based resin preferably has a density of 1050 kg/m$^3$ or more, more preferably 1100 kg/m$^3$ or more. The measurement of the density is based on the method described in ISO 1183-3:1999.

It is preferred that the polyamide-based resin is an end-capped polyamide-based resin with a capped functional group at its molecular chain end, since hydrolysis of the polyamide-based resin during the course of production of expanded beads is more reliably suppressed, so that polyamide-based resin expanded beads that capable of withstanding in-mold molding conditions may be obtained. Further, the durability of polyamide-based resin expanded beads molded body obtained by in-mold molding (hereinafter, also referred to simply as "expanded beads molded body" or "molded body") is improved.

Examples of an end-capping agent for use in capping the above molecular chain end include a carbodiimide compound, an oxazoline compound, an isocyanate compound and an epoxy compound. The carbodiimide compound is particularly preferred. These compounds may be used singly or in combination of two or more. Specific examples of the carbodiimide compound include an aromatic monocarbodiimide such as bis(dipropylphenyl)carbodiimide (e.g., "Stabaxol 1-LF" manufactured by Rhein Chemie Corporation), an aromatic polycarbodiimide (e.g., "Stabaxol P", "Stabaxol P100" and "Stabaxol P400" manufactured by Rhein Chemie Corporation), an aliphatic polycarbodiimide such as poly(4,4'-dicyclohexylmethane carbodiimide) (e.g., "Carbodilite LA-1" manufactured by Nisshinbo Chemical Inc.). The end-capping agent is preferably used in an amount of 0.1 to 5 parts by mass, more preferably 0.3 to 3 parts by mass, based on 100 parts by mass of the polyamide-based resin.

The base resin of the expanded beads of the present invention may further contain an additional polymer component or components, such as an elastomer and a thermoplastic resin other than the polyamide-based resin, to the extent that the purpose and effect of the present invention are not adversely affected. Specific examples of the additional polymer component include a polyethylene-based resin, a polypropylene-based resin, a polystyrene-based resin, a vinyl acetate resin, a thermoplastic polyester resin, an acrylic acid ester resin, a methacrylic acid ester resin, an ethylene-propylene-based rubber, an ethylene-1-butene rubber, a propylene-1-butene rubber, an ethylene-propylene-diene-based rubber, an isoprene rubber, a neoprene rubber, a nitrile rubber, a styrene-diene block copolymer and a hydrogenated styrene-diene block copolymer.

The content of such an additional polymer component in the base resin is preferably 20 parts by mass or less, more preferably 15 parts by mass or less, still more preferably 10 parts by mass or less, furthermore preferably 5 parts by mass or less, relative to 100 parts by mass of the polyamide-based resin. It is particularly preferred that the amount of the additional polymer component in the base resin is zero, that is, the base resin of the polyamide-based resin expanded beads consists only of a polyamide-based resin.

To the base resin, various generally used additives such as a cell controlling agent, an antistatic agent, a conductivity imparting agent, a lubricant, an antioxidant, a UV absorber, a flame retardant, a metal deactivator, a colorant (pigment, dye, etc.), a crystal nucleating agent and a filler, may be appropriately added as needed. Although the amount of these various additives added is different depending on the intended use of a molded body, the amount thereof is preferably 25 parts by mass or less relative to 100 parts by mass of the base resin. The amount is more preferably 15 parts by mass or less, still more preferably 10 parts by mass or less, particularly preferably 5 parts by mass or less.

Examples of the cell controlling agent include an inorganic cell controlling agent such as talc, sodium chloride, calcium carbonate, silica, titanium oxide, gypsum, zeolite, borax, aluminum hydroxide, alum and carbon, and an organic cell controlling agent such as a phosphoric acid-based compound, an amine-based compound and a polytetrafluoroethylene (PTFE).

The polyamide-based resin expanded bead of the present invention has a cell wall thickness of 5 to 80 $\mu$m, preferably 6 to 50 $\mu$m, more preferably 7 to 30 $\mu$m, still more preferably 8 to 30 $\mu$m. All upper limits and lower limits disclosed herein may be combined to define preferred ranges. Thus, for example, the cell wall thicknesses of 6 to 80 $\mu$m, 7 to 80$\mu$m, 7 to 50 $\mu$m, 8 to 80 $\mu$m and 8 to 50 $\mu$m are also preferred ranges of the cell wall thickness of the polyamide-based resin expanded beads.

When the cell wall thickness of the polyamide-based resin expanded bead is within the above range and when the crystallite size thereof is within the required range described hereinafter, buckling or breakage of the cell walls constituting the expanded bead may be suppressed during the course of compression at a high temperature. Additionally, because the cells of the polyamide-based resin expanded bead are not easily broken, a heating temperature range within which a good molded product is able to be produced becomes wide. As a consequence, it is possible to produce a molded body having good appearance and little variation of mechanical properties even when the molded body has a large thickness and/or complicated shape.

As used herein, the cell wall thickness of the expanded bead is as determined from the following formula:

$$t = L \times \{(1 - \rho f/\rho s)^{-1/3} - 1\}$$

wherein

t is a cell wall thickness [$\mu$m] of the expanded bead,
L is an average cell diameter [$\mu$m] of the expanded bead,
$\rho f$ is an apparent density [g/cm$^3$] of the expanded bead, and
$\rho s$ is a density [g/cm$^3$] of the resin constituting the expanded bead.

The cell wall thickness (t) of the polyamide-based resin expanded beads may be adjusted by controlling the average cell diameter (L) and/or the apparent density ($\rho f$) thereof. For example, the average cell diameter (L) may be mainly controlled by adjusting the amount of a cell controlling agent which is described hereinafter, while the apparent density ($\rho f$) may be mainly controlled by adjusting the amount of a blowing agent which is described hereinafter so as to obtain an appropriate expansion ratio.

The polyamide-based resin expanded beads of the present invention have a crystallite size of more than 10 nm as measured by an X-ray diffraction method. With a crystallite size of more than 10 nm, the expanded beads have excellent heat resistance and permit the use of a wide temperature range in in-mold molding of a molded body. Additionally, when the expanded beads have a crystallite size of more than 10 nm and a cell wall thickness of 5 to 80 $\mu$m, the heat resistance and compressive strength of a molded body obtained therefrom are excellent, so that the molded body is suitably used as a core of a fiber-reinforced composite article.

The improvement in heat resistance of the expanded beads, which is attained by their large crystallite size and cell wall thickness, allows for maintenance of the compressive strength thereof in high temperature conditions during the in-mold molding. Therefore, a molded body can be stably formed even under various conditions without causing deformation even when the molded body has a large thickness and a complicated shape. For the above-described reasons, the crystallite size is more preferably 11 nm or more, more preferably 12 nm or more. The upper limit of the crystallite size is not specifically limited but is generally 30 nm, preferably 20 nm. All upper limits and lower limits disclosed herein may be combined to define preferred ranges. Thus, for example, crystallite sizes of 10-30 nm, 11-30 nm, 12-30 nm and 11-20 nm are also preferred crystallite size ranges.

The crystallite size is measured by an X-ray diffraction method that is performed as follows. The X-ray diffraction method may be carried out by a transmission method using an X-ray diffraction measuring apparatus. An X-ray diffraction profile obtained by an X-ray diffraction measurement is subjected to peak separation into diffraction peaks derived from the crystal and diffraction peaks derived from amorphous material, using a Gaussian function for the peak shapes. The full width at half maximum $\beta$ (rad) of a peak having the narrowest peak width among the peaks obtained by the peak separation is calculated to determine the crystallite size D of the expanded beads based on the following formula (2) using the full width at half maximum $\beta$.

$$D = \frac{0.9\lambda}{\sqrt{\beta^2 - b^2}\cos\theta} \qquad (2)$$

In the formula (2), β represents the full width at half maximum of the diffraction peak derived from crystal, b represents the full width half at maximum of spread of X-ray, λ represents the wavelength of X-ray (nm), and θ represents the Bragg angle at a peak position (half of diffraction angle 2θ).

The crystals of the polyamide-based resin expanded beads include α crystal and γ crystal. The α crystal is more stable than the γ crystal. The expanded beads containing a larger amount of the α crystal have higher mechanical properties and heat resistance. It is therefore preferred that the crystallites mainly comprise α crystal. It is also preferred that the crystallite size of the α crystal has a crystallite size of more than 10 nm, more preferably more than 12 nm. It can be determined whether the crystal is α crystal or γ crystal based on the diffraction angle (2θ) at the peak position of an X-ray diffraction profile. In the wide-angle X-ray diffraction measurement in the range of 5 to 35 degrees, the diffraction angle (2θ) at the peak position of an X-ray diffraction profile appears in the vicinity of 20 degrees and in the vicinity of 24 degrees for α crystal, and in the vicinity of 21 degrees for γ crystal.

It is preferred that the polyamide-based resin expanded beads of the present invention have a total heat of fusion of 40 to 140 J/g as determined from a first heating DSC curve measured in accordance with JIS K7122-1987 by heat-flux differential scanning calorimetry in which a sample of the polyamide-based resin expanded beads is heated at a heating rate of 10°C/min from 30°C to a temperature higher by 30°C than a melting end temperature. The lower limit of the total heat of fusion is preferably 45 J/g, still more preferably 50 J/g, while the upper limit is preferably 130 J/g. The larger the total heat of fusion in the first heating DSC curve is, the higher is the crystallization degree of the expanded beads and more excellent is the heat resistance of the expanded beads.

The total heat of fusion is determined from the first heating DSC curve as described below. On the DSC curve, a straight line connecting a point at 150°C on the DSC curve to a point indicating the temperature at the end of a melting peak on the DSC curve is drawn. The straight line is defined as the base line. An area surrounded by the base line and the DSC curve present on the endothermic side than the base line is equivalent to the endothermic energy of a melting peak, and a quantity of heat calculated therefrom is defined as the total heat of fusion. When the DSC curve has a plurality of melting peaks, a total of the whole quantity of heat is defined as the total heat of fusion. The point indicating the temperature at the end of a melting peak on the DSC curve refers to a melting end temperature on the highest temperature side. Prior to the DSC measurement, the sample is left standing under an environment at a temperature of 23°C and a relative humidity of 50% for 24 hours or more.

It is also preferred that the polyamide-based resin expanded beads have a peak top temperature of a melting peak of 185 to 285°C as determined from a second heating DSC curve measured in accordance with JIS K7121-1987 by heat-flux differential scanning calorimetry in which a sample of the polyamide-based resin expanded beads is heated at a heating rate of 10°C/min from 30°C to a first temperature higher by 30°C than a melting end temperature, then maintained at the first temperature for 10 minutes, then cooled to 30°C at a cooling rate of 10°C/min and then heated again at a heating rate of 10°C/min to a second temperature higher by 30°C than a melting peak end temperature. The peak top temperature of the melting peak in the second heating is defined as the melting point Tm1 of the polyamide-based resin expanded beads and is derived from the crystal structure intrinsic to the polyamide-based resin.

The peak top temperature of a melting peak in the second heating DSC curve of the polyamide-based resin expanded beads is preferably 185 to 285°C. The lower limit of this range is more preferably 188°C, still more preferably 190°C, while the upper is more preferably 280°C, still more preferably 260°C, yet still more preferably 240°C, from the viewpoint of easiness in controlling temperature at the expansion step for producing the expanded beads. When the melting point is within the above range, breakage of the cell walls during the course of the expansion step may be effectively prevented and, additionally polyamide-based resin expanded beads having excellent heat resistance and a low apparent density may be easily obtained.

Description will be next made of various physical properties of the polyamide-based resin expanded beads of the present invention. It is preferred that the polyamide-based resin expanded beads have an apparent density of 0.01 to 0.3 g/cm³. With an apparent density of the expanded beads in the above range, a molded body obtained from the expanded beads has light weight and hardly shrinks after production, so that the expanded beads may be advantageously used for forming a core of a fiber-reinforced composite article. For the above reasons, the lower limit of the apparent density range is preferably 0.03 g/cm³, more preferably 0.05 g/cm³, yet still more preferably 0.08 g/cm³, while the upper limit 0.25 g/cm³, still more preferably 0.20 g/cm³, yet more preferably 0.150 g/cm³.

The apparent density of the polyamide-based resin expanded beads is measured by the following water immersing method. First, sample expanded beads having a bulk volume of about 500 cm³ are provided and left standing under conditions at a relative humidity of 50%, a temperature of 23°C and a pressure of 1 atm for 24 hours. The mass W1 of the expanded beads is then measured. A measuring cylinder containing water is provided. The expanded beads are sunk into the water in the measuring cylinder using a wire mesh. The volume V1 [cm3] of the expanded beads is measured based from the rise of the water level with the volume of the wire mesh being taken in consideration. The apparent density [g/m$^3$] of the expanded beads is obtained by dividing the mass W1 [g] of the expanded beads by the volume V1 (W1/V1).

The polyamide-based resin expanded beads of the present invention have a closed cell content of preferably 85% or more, more preferably 88% or more, still more preferably 90% or more. Having a closed cell content satisfying the above range, the expanded beads which have the above-mentioned crystallite size and cell diameter show improved heat resistance, improved mechanical properties improved in-mold moldability and are capable of producing light weight molded body by in-mold molding. The closed cell content is a percentage of the volume of closed cells based on the total volume of the cells of expanded beads and may be determined using an air pycnometer based on ASTM-D2856-70.

The average cell diameter of the polyamide-based resin expanded beads of the present invention is preferably 200 to 400 $\mu$m, more preferably 210 to 350 $\mu$m, still more preferably 220 to 300 $\mu$m. When the average cell diameter is within the above range, the polyamide-based resin expanded beads have excellent heat resistance and excellent in-mold moldability. All upper limits and lower limits disclosed herein may be combined to define preferred ranges. Thus, for example, average cell diameters of 200 to 350 $\mu$m, 210 to 400 $\mu$m, 200 to 300 $\mu$m, 220 to 350 $\mu$m and 220 to 400 $\mu$m are preferred average cell diameter ranges of the polyamide-based resin expanded beads.

The average cell diameter of a polyamide-based resin expanded beads is measured by the following method. First, an expanded bead is divided into about two through the center of the expanded bead, and a cross section thereof is photographed with a scanning electron microscope. Next, on the cross-sectional photograph, straight lines are drawn in 8 directions at equal intervals of 45° from near the center of the cross-section of the expanded bead to the outermost surface of the expanded bead, and the number of all the cells intersecting with the lines in total is counted. The value obtained by dividing the total length of the lines by the number of cells counted is defined as the cell diameter of the expanded bead. The procedure is performed in the same manner for 10 or more expanded beads, and the arithmetic means of the cell diameters of the respective expanded beads is defined as the average cell diameter of the expanded beads.

It is preferred that the polyamide-based resin expanded beads of the present invention have a ratio of a 5%-compressive stress at a temperature lower by 20°C than the melting point (Tm1) of the polyamide-based resin expanded beads (compressive stress at (Tm1-20°C)) to a 5%-compressive stress at 23°C (compressive stress at 23°C), i.e., [(Compressive stress at (Tm1-20°C))/(Compressive stress at 23°C)], of 0.1 or more. This compressive stress ratio will be hereinafter referred to as "heat resistance ratio". Expanded beads having a high heat resistance ratio show a smaller reduction in compressive stress at high temperature as compared with compressive stress at normal temperature, which means that the expanded beads retain high compressive stress even at high temperature and that the expanded beads excel in heat resistance. The polyamide-based resin expanded beads having a high heat resistance ratio are favorably used for forming a core of a fiber-reinforced composite article. For the above reasons, the heat resistance ratio is more preferably 0.15 or more, still more preferably 0.2 or more. The upper limit is generally about 1. The temperature (Tm1-20°C) is selected for evaluation of compressive physical properties, since the crystals of the expanded beads are not melted at that temperature.

The 5%-compressive stress at a temperature (Tm1-20°C) may be determined by measurement of the expanded beads using a thermal analysis apparatus (TMA, for example, "TMA 7100" manufactured by Hitachi High-Tech Science Corporation) at compression mode. Specifically, one expanded bead randomly selected is held in the minor axis direction of the expanded bead under a load of 10 mN with a compression probe, and heated to a temperature (Tm1-20°C). Then, while retaining the temperature at (Tm1-20°C)), pushing at a rate of 1 mm/min is performed to monitor the load of the probe. The stress at a time when the thickness of the expanded bead reaches 5% of the thickness of the expanded bead before compression is defined as the 5%-compressive stress at (Tm1-20°C) of the expanded bead.

The 5%-compressive stress at 23°C may be determined in the same manner as above using a thermal analysis apparatus (TMA, for example, "TMA 7100" manufactured by Hitachi High-Tech Science Corporation) at compression mode. Specifically, one expanded bead randomly selected is held in the minor axis direction of the expanded bead under a load of 10 mN with a compression probe. Then, pushing at a rate of 1 mm/min is performed at 23°C to monitor the load of the probe. The stress at a time when the thickness of the compressed expanded bead reaches 5% of the thickness of the expanded bead before compression is defined as the 5%-compressive stress at 23°C.

The average mass per one polyamide-based resin particle is set as appropriate depending on the size, the apparent density, etc. of the target polyamide-based resin expanded beads and generally preferably 0.5 to 15 mg. With an average mass in the above range, the apparent density of the polyamide-based resin expanded beads is able to be increased. From the above point of view, the lower limit of the mass of the polyamide-based resin particle is more preferably 1.0 mg, still more preferably 1.5 mg, while the upper limit is more preferably 10.0 mg, still more preferably 7.0 mg, furthermore preferably 5.0 mg.

The production method of the polyamide-based resin expanded beads (hereinafter also referred to simply as expanded beads) and the polyamide-based resin molded body (hereinafter also referred to simply as molded body) will be next described. The expanded beads are produced by foaming and expanding polyamide-based resin particles (hereinafter also referred to simply as resin particles). The production method of the resin particles is not particularly limited, and a known method may be employed. The resin particles are obtained, for example, by a strand cutting method including the steps of feeding a polyamide-based resin and, on an as needed basis, an additive such as a cell controlling agent and colorant, into an extruder to make a molten kneaded product by kneading, extruding the molten kneaded product in a strand form from small holes of a die attached to the tip of the extruder, and cutting the extruded strands to have a predetermined mass by a pelletizer, a hot cutting method including the steps of extruding the molten kneaded product into a gas phase and immediately cut the extrudate, or an underwater cutting method (UWC method) including the steps of extruding the molten kneaded product into water and then immediately cut the extrudate.

The production method of the polyamide-based resin expanded beads having the specific cell wall thickness and specific crystallite size is not particularly limited. It is preferred, however, that the expanded beads are produced by a method which includes a step of heating the resin particles or expanded beads obtained therefrom in an environment having a moisture content that is greater than that in an equilibrium state at room temperature and atmospheric pressure.

Specific examples of the method include (1) a method including impregnating polyamide-based resin particles with a large amount of water, heating the resulting water-saturated resin particles to grow crystallites thereof, and expanding the resulting resin particles using a blowing agent to obtain expanded beads having a large crystallite size; (2) a method including impregnating polyamide-based resin particles with a large amount of water and with a blowing agent, and heating the resulting resin particles to expand the resin particles and to grow the crystallite size thereof, thereby producing expanded beads having a large crystallite size; and (3) a method including impregnating polyamide-based resin expanded beads with a large amount of water, and heating the resulting water-saturated expanded beads to grow crystallites thereof and to obtain polyamide-based resin expanded beads having a larger crystallite size. Among the methods (1) to (3), the method (2) is preferred since expanded beads having a large crystallite size are obtainable with ease. These methods (1) to (3) may be combined as appropriate.

Examples of the method for impregnating the polyamide-based resin particles or the polyamide-based resin expanded beads with water include a method including the step of immersing the resin particles or the expanded beads in water, a method including the step of allowing the resin particles or the expanded beads to stand still in a high-humidity atmosphere, for example, at a relative humidity of 90% or more, and a method including the step of spraying water on the resin particles or the expanded beads with a spray apparatus or the like. Among them, a method including immersing the resin particles or the expanded beads in water is preferred, because a large amount water is easily contained in the resin particles or the expanded beads.

The impregnation of the resin particles or the expanded beads with water is preferably carried out in such a way that a water content of the resin particles or the expanded beads becomes 3% by mass or more, more preferably 5% by mass or more, still more preferably 10% by mass or more, particularly preferably 15% by mass or more. Incidentally, when the resin particles or the expanded beads are heated in water, a sufficient amount of water is impregnated into them so that the above preferred water content is satisfied.

The water content in the resin particles or expanded beads is able to be determined using a Karl Fisher moisture analyzer. Specifically, the resin particles or the expanded beads are wiped with a dry cloth to remove water on the surfaces thereof. Then the resin particles or expanded beads are weighed. Subsequently, the resin particles or expanded beads are heated to vaporize internal moisture using a heating moisture vaporizer. The moisture content is measured by Karl Fischer titration (coulometric titration) using a Karl Fischer moisture analyzer.

Examples of the method for heating the resin particles or expanded beads to grow crystallite size thereof include a method including the steps of immersing the resin particles or the expanded beads in a medium such as water and heating the resin particles or the expanded beads by heating the medium, and a method including the step of heating the resin particles or the expanded beads by blowing hot air. Among them, a method including the step of heating in a medium such as water is preferred, as uniform heating is able to be achieved.

The heating temperature when heating the resin particles or expanded beads is preferably equal to or higher than a temperature that is lower by 90°C than the melting point (Tm) of the polyamide-based resin (Tm-90°C), more preferably equal to or higher than (Tm-80°C), still more preferably equal to or higher than (Tm-70°C). On the other hand, the heating temperature is preferably equal to or lower than a temperature that is higher by 20°C than the melting point (Tm) (Tm+20°C), more preferably equal to or lower than (Tm+10°C), still more preferably equal to or lower than the melting point (Tm). The range of the heating temperature is preferably (Tm-90°C) to (Tm+20°C), more preferably (Tm-80°C) to (Tm+10°C), still more preferably (Tm-70°C) to Tm. All upper limits and lower limits disclosed herein may be combined to form preferred ranges. Thus, the preferred ranges of the heating temperature are, for example, (Tm-90°C) to (Tm+10°C), (Tm-90°C) to Tm, (Tm-80°C) to (Tm+20°C), (Tm-80°C) to Tm, (Tm-70°C) to (Tm+10°C) and (Tm-70°C) to (Tm+20°C).

The expanded beads of the present invention may be suitably obtained by expanding water-containing polyamide-based resin particles. Specifically, the following method 1 or 2 may be suited.

The method 1 includes a dispersing step of dispersing the resin particles in water in a closed vessel to obtain a dispersion, an impregnating step (I) of impregnating the resin beads in the dispersion with a blowing agent, and an expanding step of releasing the dispersion, which contains the resin particles impregnated with the blowing agent and water, from inside of the closed vessel to a space at a pressure lower than the pressure in the closed vessel to foam and expand the resin particles.

The method 2 comprises a water impregnating step of allowing resin particles to absorb water to obtain water-containing resin particles, an impregnating step (II) of impregnating the resin particles with a blowing agent in a closed vessel, and an expanding step of heating the water-containing resin particles impregnated with the blowing agent to foam and expand the resin particles.

The method 1 will be described in detail bellow. The dispersing step of method 1 includes dispersing the resin particles in water in a closed vessel to obtain a dispersion, which step may be carried out by any suitable known way. For example, the dispersion may be suitably obtained by mixing the resin particles with water in a vessel with stirring. On an as needed basis, it is preferred that a dispersant such as inorganic material such as aluminum oxide, tricalcium phosphate, magnesium pyrophosphate, zinc oxide, kaolin, mica, talc and smectite, and a dispersion aid such as anionic surfactant such as sodium dodecylbenzene sulfonate and sodium alkane sulfonate be added. The mass ratio between the resin particles and the dispersant (resin particles/dispersant) is preferably 20 to 2000, more preferably 30 to 1000. The mass ratio between the dispersant and the dispersion aid (dispersant/dispersion aid) is preferably 1 to 500, more preferably 1 to 100.

The blowing agent impregnating step (I) include impregnating the resin particles with a blowing agent. Although the method of impregnating the resin particles with a blowing agent is not particularly limited, it is preferred that the resin particles are dispersed in water in a pressurizable closed vessel such as an autoclave to form a dispersion and injecting a blowing agent into the closed vessel to impregnate the resin particles with the blowing agent under pressure. In this case, simultaneously with the impregnation of the resin particles with the blowing agent, the resin particles may be impregnated also with a large amount of water. The impregnation of the resin particles with the blowing agent also proceeds during the course of heating step and retaining step for the dispersion in the closed vessel, which will be described hereinafter, the blowing agent impregnating step (I) may overlap with the heating step and retaining step. The blowing agent impregnating step (I) is desirably completed before start of the dispersion releasing step.

From the viewpoint of sufficiently impregnating the resin particles with a blowing agent in a short time, the temperature during the impregnating step (I) is preferably 50°C to the melting point (Tm) of the polyamide-based resin, more preferably 80°C to (Tm-20°C). All upper limits and lower limits disclosed herein may be combined to define preferred ranges. Thus, for example, impregnating temperatures of 50°C to (Tm-20°C) and 80°C to Tm are also preferred impregnating temperature ranges.

From the viewpoint of sufficiently impregnating the resin particles with the blowing agent in a short time, the blowing agent is preferably injected into the closed vessel containing the dispersion so that the pressure in the closed vessel is 1.5 MPa(G) or more, more preferably 2.5 MPa(G) or more. The pressure is, however, preferably 7.0 MPa(G) or less, more preferably 5.0 MPa(G) or less. Thus, the preferred pressure ranges are, for example, 1.5 to 7.0 MPa(G), 1.5 to 5.0 MPa(G), 2.5 to 7.0 MPa(G) and 2.5 to 5.0 MPa(G). The unit "MPa(G)" means a gauge pressure.

During the period from the dispersing step of obtaining the dispersion until the start of the expanding step, the resin particles absorb water in a large amount. From the viewpoint of allowing the resin particles to sufficiently absorb water, the rate at which the temperature of the dispersion increases to the expanding temperature is preferably 10°C/min or less, more preferably 7°C/min or less. On the other hand, from the viewpoint of improving the productivity of the expanded beads, the temperature rising rate is preferably 1°C/min or more, more preferably 2°C/min or more. Thus, the preferred pressure ranges are, for example, 1 to 10°C/min, 2 to 10°C/min, 1 to 7°C/min and 2 to 7°C/min.

As the blowing agent, a physical blowing agent may be used. Examples of the physical blowing agent include an organic physical blowing agent such as an aliphatic hydrocarbon such as propane, butane, pentane, hexane and heptane, an alicyclic hydrocarbon such as cyclopentane and cyclohexane, a halogenated hydrocarbon such as chlorofluoromethane, trifluoromethane, 1,1-difluoroethane, 1,1,1,2-tetrafluoroethane, methyl chloride, ethyl chloride, methylene chloride, and a dialkyl ether such as dimethyl ether, diethyl ether and methyl ethyl ether. Examples of the inorganic physical blowing agent include carbon dioxide, nitrogen, helium, argon and air. From the viewpoints of less impact on the environment and excellence in safety due to inflammability, an inorganic physical blowing agent is preferred. Carbon dioxide or nitrogen is more preferred and carbon dioxide is still more preferred.

It is preferred that a retention step for maintaining the dispersion in a heated state is performed before the expansion step. While crystal grows during heating of the dispersion to the blowing agent impregnation temperature, it is preferred that the retention step of maintaining the water containing resin particles at a determined temperature range is performed to surely grow the crystallites of the polyamide-based resin particles.

From the viewpoint of plasticizing the resin particles with water in the dispersion and of increasing the crystallite size of the obtained expanded beads, the retention step is preferably carried out at a temperature within the following ranges. Namely, the retention temperature of the dispersion in the retention step is preferably (Tm-90°C) to (Tm-50°C) where Tm represents a melting point of the polyamide-based resin, more preferably (Tm-80°C) to (Tm-55°C), still more preferably (Tm-70°C) to (Tm-57°C), yet still more preferably (Tm-65°C) to (Tm-59°C). All upper limits and lower limits disclosed herein may be combined to form preferred ranges. Thus, for example, retention temperatures of, (Tm-70°C) to (Tm-50°C), (Tm-65°C) to (Tm-50°C), (Tm-80°C) to (Tm-59°C), (Tm-70°C) to (Tm-59°C) and (Tm-65°C) to (Tm-50°C) are also preferred retention temperature ranges.

The suitable retention time varies with a crystal growing rate of the polyamide-based resin. However, from the viewpoint of more easily growing the crystallite in the desired range, the retention time in the retention is preferably 20 minutes or more, still more preferably 25 minutes or more. The retention time in the retention step is preferably 60 minutes or less, more preferably 40 minutes or less from the standpoint of economy. Thus, preferred retention time ranges are, for example, 20-60 minutes, 20-40 minutes, 25-60 minutes and 25-40 minutes. In the retention step, a multi-step regulation may be set in the temperature range, or a slow temperature rising process for a sufficient time in the temperature range may be employed. From the viewpoint of more easily growing the crystallite, it is preferred that the one-step regulation in the temperature range (constant retention temperature) be set to retain the temperature for the above time.

From the viewpoints of allowing the polyamide-based resin particles to sufficiently absorb water and uniformly impregnating the polyamide-based resin with a blowing agent, it is preferred that the retention step be performed under pressurized conditions, and a same pressure as the impregnation pressure be retained. The pressure in the vessel containing the dispersion is controlled to preferably 1.5 MPa(G) or more, more preferably 2.5 MPa(G) or more. Also, the pressure is preferably controlled to 7.0 MPa(G) or less, more preferably 5.0 Mpa(G) or less. Thus, the preferred pressure ranges in the vessel containing the dispersion are, for example, 1.5 to 7.0 MPa(G), 1.5 to 5.0 MPa(G), 2.5 to 7.0 MPa(G) and 2.5 to 5.0 MPa(G).

An expanding step is a step of foaming and expanding the polyamide-based resin particles impregnated with a blowing agent. In method 1, following the retention step, the resin particles impregnated with the blowing agent are released together with water (dispersing medium) to an atmosphere at a pressure lower than the pressure in the closed vessel (usually at atmospheric pressure) to foam and expand the resin particles.

From the viewpoint of obtaining expanded beads having a low apparent density and a high closed cell content, the temperature of the dispersion immediately before expanding (hereinafter also referred to as expanding temperature) is preferably (Tm-90°C) to (Tm-59°C) where Tm represents a melting point of the polyamide-based resin, more preferably (Tm-80°C) to (Tm -57°C), still more preferably (Tm-70°C) to (Tm-55°C), yet still more preferably (Tm-65°C) to (Tm-50°C). All upper limits and lower limits disclosed herein may be combined to form preferred ranges. Thus, for example, expanding temperatures of (Tm-90°C) to (Tm-50°C), (Tm-70°C) to (Tm-50°C), (Tm-65°C) to (Tm-50°C), (Tm-70°C) to (Tm-55°C), (Tm-90°C) to (Tm-59°C) and (Tm-70°C) to (Tm-57°C) are preferred expanding temperature ranges.

In the expanding step, the pressure immediately before release of the dispersion (expanding pressure) is preferably 0.5 to 10.0 MPa(G), more preferably 1.5 to 7.0 MPa(G), still more preferably 2.5 to 5.0 MPa(G). The expanding pressure is preferably or less, more preferably or less, still more preferably or less. All upper limits and lower limits disclosed herein may be combined to define preferred ranges. Thus, for example, expanding pressures of 0.5 to 10.0 MPa(G), 1.5 to 10.0 MPa(G), 1.5 to 7 MPa(G), 2.5 to 7.0 MPa(G) and 2.5 to 5.0 MPa(G) are preferred expanding pressure ranges.

Further, in the expanding step, it is preferred that the temperature of the atmosphere into which the beads are released be maintained high, when the polyamide-based resin particles impregnated with the blowing agent are discharged together with water under a pressure lower than the pressure in the closed vessel. Thus, the atmospheric temperature may be made high using steam or high-temperature air. Retaining the temperature of the atmosphere into which the resin particles are released high enables to accelerate the growth of the crystallite of the polyamide-based resin, so that the resulting polyamide-based resin expanded beads are able to have a larger crystallite size. The above atmospheric temperature is preferably 80 to 120°C. The pressure of the atmosphere is preferably 0.05 to 0.3 MPa(G).

Description will be next made of method 2 for producing the expanded beads, which includes a water impregnating step, a blowing agent impregnating step (II), and a heating step. The water impregnating step may be followed by, preceded by or simultaneous with the impregnating step (II).

The water impregnating step is preferably performed by immersing the resin particles in water at a temperature of 10°C to 100°C, more preferably 15°C to 80°C for 20 minutes or more, more preferably 40 minutes or more. The immersing time is generally 24 hours or shorter. The water impregnating step may be carried out under a pressurized state as appropriate.

The blowing agent impregnating step (II) for impregnating the resin particles with a blowing agent may be carried out in any known way. It is, however, preferred that a pressurizable closed vessel such as an autoclave is charged with the resin particles and is pressurized by injecting a blowing agent thereinto so that the resin particles are impregnated with the blowing agent. When the water-containing resin particles are transferred from a vessel used in the step of obtaining a water containing resin particles (vessel 1) to a vessel used in the step of impregnating with a blowing agent (vessel 2), the resin particles containing water are taken out from the vessel 1 and fed into the vessel 2 without removing the water on the resin particles surface. If desired, however, the impregnating step (II) may be carried out with the same vessel as used for obtaining a water-containing resin particles.

From the viewpoint of sufficiently impregnating the resin particles with a blowing agent in a short time, the impregnating temperature in the impregnating step (II) is preferably 0°C or more, more preferably 5°C or more. From the viewpoint of preventing the resin particles from adhering to each other, the temperature is preferably 80°C or less, more preferably 60°C or less. Thus, the preferred impregnating temperature ranges are 0°C to 80°C, 0°C to 60°C, 5°C to 80°C or 5°C to 60°C.

From the viewpoint of sufficiently impregnating the resin particles with a blowing agent in a short time, the impregnation pressure in the impregnating step (II) is preferably controlled such that addition of the blowing agent into the pressure vessel containing the beads results in a pressure in the pressure vessel of preferably 1.5 MPa(G) or more, more preferably 2.5 MPa(G). The impregnation pressure is preferably 7.0 MPa(G) or less, more preferably 5.0 MPa(G) or less. Thus, the preferred impregnating pressure ranges are 1.5 to 7. 0 MPa(G), 1.5 to 5. 0 MPa(G), 2.5 to 7. 0 MPa(G) and 2.5 to 5. 0 MPa(G).

The total time for impregnating the resin particles with a blowing agent in the impregnating step (II) is preferably 30 minutes or more, more preferably 60 minutes or more. On the other hand, from the viewpoint of productivity of the polyamide-based resin expanded beads, the total time is preferably 300 minutes or less, more preferably 240 minutes or less. Thus, the preferred total impregnating time ranges are 30 to 300 minutes, 30 to 240 minutes, 60 to 300 minutes and 60 to 240 minutes.

After completion of the impregnation of the blowing agent into the resin particles, the pressure in the vessel is gradually reduced to an atmospheric pressure to obtain water-containing resin particles impregnated with the blowing agent.

The expanding step in method 2 is a step of heating the water-containing resin particles impregnated with the blowing agent to foam and expand the resin particles impregnated with the blowing agent. A method for expanding the resin particles is not particularly limited. One preferred method includes, for example, heating the water-containing resin particles impregnated with the blowing agent with a heating medium such as steam, high-temperature air, and oil to cause expansion thereof.

By method 2 including the foregoing steps, expanded beads having a large crystallite size may be obtained. If desired, however, method 2 may additionally include a retention step similar to that in method 1.

Production of a polyamide-based resin molded body from the polyamide-based resin expanded beads by in-mold molding will be next described. In the in mold-molding, steam heating is preferably adopted to heat the expanded beads. Steam allows the polyamide-based resin in the polyamide-based resin expanded beads to be plasticized through water absorption, so that the steam pressure can be reduced. The resulting molded body is dried to restore the original properties of the polyamide-based resin, so that a molded body having a high heat resistance can be obtained.

Since the expanded beads of the present invention has specific crystallite size and cell wall thickness, the expanded beads and the molded body obtained therefrom are suited as a core of a fiber-reinforced composite article. Thee expanded beads allow for the production of a molded body having a large thickness. For example, the thick molded body has a thickness of preferably 30 mm or more, more preferably 40 mm or more, still more preferably 50 mm or more.

The density of a molded body of the polyamide-based resin expanded beads is preferably 20 kg/m$^3$ to 300 kg/m$^3$, more preferably 50 kg/m$^3$ to 250 kg/m$^3$, still more preferably 80 to 200 kg/m$^3$, particularly preferably 80 to 150 kg/m$^3$. When the density of the molded body is in the above range, excellent balance between the light weight and the strength of the molded body is achieved. All upper limits and lower limits disclosed herein may be combined to form preferred ranges. Thus, for example, densities of 20 to 250 kg/m$^3$, 20 to 200 kg/m$^3$, 20 to 150 kg/m$^3$, 50 to 200 kg/m$^3$, 80 to 250 kg/m$^3$ and 80 to 200 kg/m$^3$ are also preferred density ranges of the molded body.

The density of the molded body is measured by the following method. First, the molded body which has been left standing under conditions at a temperature of 23°C and a relative humidity of 50% for 24 hours or more is cut into rectangular parallelepiped samples having appropriate sizes (with removal of the molding skin). The apparent volume of each of the samples is determined from the external dimensions of each of the samples, and the total thereof is defined as the apparent volume H of the samples. The total weight W of the samples is divided by the apparent volume H to obtain the density of the molded body [kg/m$^3$].

The closed cell content of the molded body of the present specification is preferably 80% or more, more preferably 85% or more, still more preferably 90% or more. When the closed cell content satisfies the above range, the molded body has improved mechanical properties. The closed cell content refers to a ratio of the volume of closed cells relative to the volume of the cells (total of the volume of closed cells and the volume of open cells) and may be determined using an air pycnometer in accordance with a procedure C described in ASTM-D2856-70. When the expanded beads having a large crystallite size are subjected to in-mold molding, the obtained molded body has a low apparent density and a high closed cell content.

The expanded beads of the present invention and an in-mold molded body obtained therefrom, which have excellent heat stability and excellent mechanical properties, may be suitably used as a core precursor (or core material) to form a core for a fiber-reinforced composite article (hereinafter also referred to simply as FRPC) that comprises the core and a skin of a fiber-reinforced resin bonded to at least a part of the core. The resin used in FRPC may be a thermoplastic resin and/or a thermosetting resin. In order to reinforce the resin, fibers are incorporated into the resin. Thus, in one embodiment of the present invention, FRPC is produced by processing (i) a core precursor which is either a plurality of the above-described polyamide-based resin expanded beads or a molded body including a plurality of said polyamide-based resin expanded beads that are bonded together, (ii) reinforcing fibers and (iii) a thermoplastic or thermosetting resin together in a mold.

Examples of the reinforcing fibers include a glass fiber, a carbon fiber, a silicon carbide fiber, an alumina fiber, a tyranno fiber, a basalt fiber, an aromatic polyamide fiber, a stainless fiber, a steel fiber, a potassium titanate fiber, a silicon carbide fiber and a boron fiber.

These fibers may be in the form of monofilaments, yarns, strands, robings, chopped strands, fabrics, knitted fabrics and non-woven fabrics. The fiber-reinforced composite article may be produced by any known method such as a hand lay-up molding method, a spray-up molding method, a resin transfer molding method (RTM), a sheet molding compounding method (SMC), a bulk molding compounding method (BMC) and a reaction injection molding method (RIM).

Examples of the thermosetting resin used in the fiber-reinforced resin include an epoxy resin, an unsaturated polyester resin, a phenol resin, a melamine resin, a polyurethane resin, a silicone resin, a maleimide resin, a vinyl ester resin, a cyanate resin and a resin formed through pre-polymerization of maleimide resin and cyanate ester. Above all, an epoxy resin and a vinyl ester resin are particularly preferred for reasons of good heat resistance, shock absorbing property and chemical resistance. The thermosetting resin may be added with one or more additives such as a curing agent and a curing accelerator.

Examples of the thermoplastic resin used in FRPC include an olefin resin, a thermoplastic polyester resin, a thermoplastic epoxy resin, an amide resin, a thermoplastic polyurethane resin, a sulfide resin and an acrylic resin. Above all, a thermoplastic polyester resin and a thermoplastic epoxy resin are preferred for reasons of improved adhesiveness to the core and of providing improved adhesion between the fibers.

The fiber-reinforced composite article (FRPC) may be produced by various methods using the polyamide-based resin expanded beads for forming a core thereof. Examples of the suitable methods (a) to (g) are described below.

In method (a), the polyamide-based resin expanded beads are subjected to in-mold molding to obtain a molded body in a manner described in detail above.

The molded body is placed in a mold together with a composite skin material such as a prepreg, such that the skin material is located one or both sides of the molded body or surrounds the molded body. As used herein, the term "prepreg" refers to one or more layers of reinforcing fibers, such as carbon fibers, impregnated with a curable thermosetting or thermoplastic resin such as an epoxy resin. The molded body and skin material are then heated under pressure in the mold to cure the resin and to obtain FRPC having a core of the molded body integrally bonded to a composite skin of the fiber-reinforced resin.

In method (b), a fiber sheet is placed in a mold, into which are then filled the polyamide-based resin expanded beads or into which is then disposed a molded body (i.e., preform) of the polyamide-based resin expanded beads which are bonded together with gaps or interstices being formed therebetween. A liquid thermosetting resin composition is then fed to the mold to impregnate fiber sheet therewith and to fill the gaps between the expanded beads therewith. The contents in the mold are then processed in the mold by heating under pressure to cure the thermosetting resin, to form a core of the expanded beads that are mutually bonded with the thermosetting resin, to form a skin of the fiber sheets that are impregnated with the thermosetting resin and to integrally bond the core and skin together with the thermosetting resin, thereby obtaining FRPC.

In method (c), the polyamide-based resin expanded beads are double-coated with a liquid thermosetting resin composition and then with reinforcing fiber particles such as carbon fiber particles. The double coated expanded beads having an inner, thermosetting resin coating and an outer, reinforcing fiber coating are placed in a mold and heated under pressure to cure or semi-cure the thermosetting resin and to obtain a preform (molded product) in which the expanded beads are bonded together with the thermosetting resin. The thus obtained preform and prepreg sheet or sheets are placed in a mold cavity. A liquid thermosetting resin (such as epoxy resin) composition is then fed to the mold to fill a gap between the preform and the prepreg sheet therewith and to fill the gaps between the expanded beads in the preform therewith. Then, the contents in the mold cavity are processed in a manner similar to that in method (a) or (b) to obtain FRPC composed of a core of the preform and a skin of the fiber-reinforced resin bonded to the core. The reinforcing fiber particles used for coating the expanded beads have a length of preferably 0.05 to 1 mm, more preferably 0.1 to 0,5 mm, and an aspect ratio (L/D) of preferably 2 or more, more preferably 10 or more, with the upper limit being generally 100.

Method (d) is the same as method (b) except that the polyamide-based resin expanded beads used in method (b) are substituted with the coated expanded beads which are similar to those used in method (c) or with a molded body which is similar to one used in method (b) and in which the polyamide-based resin expanded beads are fusion-bonded together with gaps or interstices being formed therebetween.

In method (e), a fiber sheet is disposed in a mold, into which coated expanded beads that are similar to those used in method (c) are filled. The contents in the mold are heated under pressure to impregnate the fiber sheet with the thermosetting resin that have been coated on the expanded beads. If desired, a supplementary amount of the thermosetting resin may be fed into the mold. The contents in the mold are then processed to cure the thermosetting resin, to form a core of the expanded beads that are mutually bonded with the thermosetting resin, to form a skin of the fiber sheets that are impregnated with the thermosetting resin and to integrally bond the core and skin with the thermosetting resin, thereby obtaining FRPC. The curing conditions in the above methods (a) to (e) generally involve a temperature of 80 to 250°C, the temperature varies depending upon the curing temperature of the thermosetting resin and the melting point of the polyamide-based resin contained in the expanded beads.

In method (f), a resin transfer molding method is adopted using an unsaturated polyester resin as a thermosetting resin. The method (f) includes providing a molded body with a pre-determined shape corresponding to the shape of the mold, which molded body is produced by in-mold molding of the expanded beads in a manner described previously. The molded body is then placed in a mold such that a predetermined space is formed between the inside surface of the mold and the outer periphery of the molded body. Reinforcing fibers such as glass fibers are then inserted into the space and a curable unsaturated polyester resin liquid composition is introduced into the mold to fill the space and to impregnate the unsaturated polyester resin liquid into the reinforcing fibers. The contents in the mold are subjected to molding conditions in which the liquid composition is cured, thereby obtaining FRPC in which at least part of the molded body as a core is coated with a fiber-reinforced polyester resin as a skin. The curable unsaturated polyester resin liquid composition is well known and generally contains a curing catalyst, a unsaturated polyester resin and a vinyl monomer. Alternately, the molded body may be placed within the mold together with a prepreg sheet containing reinforcing fibers impregnated with the curable unsaturated polyester resin liquid composition such that the molded body is laminated or covered with the prepreg sheet. The contents in the mold are subjected to molding conditions to obtain FRPC. Since the curing reaction of the unsaturated polyester resin is exothermic, the curing may be performed without need of heating. However, in order to improve the strength of FRPC, the cured product may be aged at 60 to 100°C for 5 to 60 minutes.

In method (g), a hand lay-up molding method or a spray-up molding method is adopted. In these methods, a molded body of the polyamide-based resin expanded beads in the form of a plate is covered or applied, on one or both sides thereof, with a layer containing reinforcing fibers and an unsaturated polyester resin liquid. The laminate is then processed to cure the polyester resin to obtain FRP having a core of the expanded beads and a skin of the fiber layer impregnated with the polyester resin. Since the polyester resin is penetrated into the cells in surface portions of the molded body (core), the core is tightly bonded to the skin.

For the production of FRPC, various methods other than the above methods (a) to (g) may be adopted and various reinforcing fibers and various thermosetting and thermoplastic resins may be used as long as the objects and effects of the present invention are accomplished.

Examples

The following nonlimitive examples will further illustrate the present invention.

Production of Polyamide-Based Resin particles:

Production Example 1

100 Parts by mass of a polyamide-based resin (5033B, details thereof are shown in Table 1), 0.3 part by mass of a cell controlling agent ("Talcum Powder PK-S" (manufactured by Hayashi Kasei Co., Ltd.) and 1 part by mass of an end-capping agent (aromatic polycarbodiimide, "Stabaxol P" manufactured by Rhein Chemie Corporation, indicated as P in Table 2) were fed to an extruder and melted and kneaded therein. The molten kneaded mass was extruded through a die attached to the tip of the extruder in the form of strands each having a circular cross section. The extruded strands were cooled with water and cut into particles pieces having an average weight of 2 mg with a pelletizer and dried to obtain polyamide-based resin particles.

Production Example 2

Polyamide-based resin particles were obtained in the same manner as in Production Example 1 except that 1030B (details thereof are shown in Table 1) was used in place of 5033B as the polyamide-based resin.

Production Example 3

Polyamide-based resin particles were obtained in the same manner as in Production Example 1 except that E2046 (details thereof are shown in Table 1) was used in place of 5033B as the polyamide-based resin and that "Stabaxol P100" (aromatic polycarbodiimide, manufactured by Rhein Chemie Corporation, indicated as P100 in Table 2) was used in place of "Stabaxol P" as the end-capping agent.

Table 1

| Abbreviation | Resin Composition | Melting Point Tm (°C) | Density (kg/m³) | Flexural Modulus (MPa) | Maker | Product Name |
|---|---|---|---|---|---|---|
| 5033B | Polyamide 6/66copolymer (Nylon 6/66) Polyamide 6:Polyamide 66 =85/15 | 197 | 1140 | 1260 | Ube Industries Ltd. | UBE Nylon 5033B |
| 1030B | Polyamide 6 (Nylon 6) | 220 | 1140 | 1770 | Ube Industries Ltd. | UBE Nylon 1030B |
| E2046 | Polyamide 6 (Nylon 6) | 259 | 1140 | 2050 | Unitika Ltd. | - |

Physical properties of the polyamide-based resins shown in Table 1 were measured by the following methods.

Melting Point Tm:

By heat-flux differential scanning calorimetry based on JIS K7121-1987, the melting point of polyamide-based resin was measured. Heating (first heating) was performed from 30°C to a temperature higher by 30°C than a melting end temperature at a heating rate of 10°C/min under a nitrogen flow at 30 mL/min, then maintained at the first temperature for 10 minutes, then cooled to 30°C at a cooling rate of 10°C/min, and then heated again (second heating) at a heating rate of 10°C/min to a temperature higher by 30°C than a melting peak end temperature to obtain a second heating DSC curve. A peak top temperature of the melting peak in the second heating DSC curve was defined as the melting point Tm. A high-sensitive differential scanning calorimeter "EXSTAR DSC7020" (manufactured by SII Nano Technology Inc.) was used as the measurement apparatus. Before the measurement of the DSC curve, the polyamide-based resin was allowed to stand under an environment at a temperature of 23°C. and a relative humidity of 50% for 24 hours or more.

Density:

The density was determined by the method described in ISO 1183-3:1999.

Flexural Modulus:

The flexural modulus of a polyamide-based resin was determined in accordance with JIS K7171(2016). Five resin test pieces each having a thickness of 4 mm, a width of 10 mm and a length of 80 mm were prepared and allowed to stand at a temperature of 23°C and a relative humidity of 50% for 72 hours. Each of the test pieces was then subjected to a bending test using a testing machine Autograph AGS-10kNG (manufactured by Shimadzu Corporation) under conditions including a distance between fulcrums of 64 mm, an indenter radius of 15.0 mm, a support radius of 25.0 mm, a test rate of 2 mm/min, a temperature of 23°C, and a relative humidity of 50%. The arithmetic average of the obtained five flexural modulus values was used as the flexural modulus of the polyamide-based resin.

Production of Polyamide-Based Resin Expanded Beads:

Example 1

In a 5 L autoclave having a stirrer, 1 kg of the polyamide-based resin particles obtained in Production Example 1 and 3 L of water were charged and stirred to obtain a dispersion, to which 0.3 part by mass of kaolin as dispersant and 0.004 part by mass of sodium alkylbenzene sulfonate as surfactant were added relative to 100 parts by mass of the polyamide-based resin particles. The contents in the autoclave were heated with stirring from room temperature (23°C) to 137°C (impregnation temperature), during which heating period carbon dioxide as a blowing agent was injected into the autoclave until the pressure in the autoclave at 137°C reached 4.0 MPa(G) (impregnation pressure). On this occasion, the heating-up period from 23°C to the impregnation temperature was 40 minutes. Subsequently, the contents in the autoclave were maintained at 137°C (retention temperature TR) and 4.0 MPa(G) (retention pressure) for 30 minutes. Thereafter, the contents in the form of a dispersion in the autoclave were released into the atmospheric pressure (0.1 MPa) at an expanding temperature TF shown in Table 2 to obtain expanded beads. The temperature of the contents immediately before the release from the autoclave (expanding temperature) was 137°C and the pressure in the autoclave was 4.0 MPa(G). The expanded beads obtained were aged in an oven at 60°C for 24 hours and then gradually cooled to obtain polyamide-based resin expanded beads.

The physical properties of the polyamide-based resin expanded beads are shown in Table 2. The moisture content of the expanded beads immediately after expansion in Example 1 were measured to be 18%. The moisture content of the expanded beads was higher than the equilibrium moisture content of the polyamide-based resin particles. It is conceivable that the expanded beads were in a supersaturated water absorption state, so that the moisture content of the obtained expanded beads was higher than the saturated moisture content of the resin particles. It is also conceivable that the moisture content of the resin particles within the autoclave is at least higher than the moisture content of the expanded beads immediately after expanding, though it is difficult to measure the moisture content of the expanded beads within the autoclave.

Example 2

Polyamide-based resin expanded beads were obtained by the same method as in Example 1, except that the resin particles obtained in Production Example 2 were used and that the impregnation temperature, retention temperature and expanding temperature were changed to 158°C. The physical properties of the obtained expanded beads are shown in Table 2.

Example 3

Polyamide-based resin expanded beads were obtained by the same method as in Example 1, except that the resin particles obtained in Production Example 3 were used and that the impregnation temperature, retention temperature and expanding temperature were changed to 176°C. The physical properties of the obtained expanded beads are shown in Table 2.

Comparative Example 1

Polyamide-based resin expanded beads were obtained by the same method as in Example 1, except that the impregnation temperature and retention temperature were changed to 139°C and expanding temperature was changed to 133°C. The physical properties of the obtained expanded beads are shown in Table 2.

Comparative Example 2

An autoclave was charged with 3 kg of the polyamide-based resin particles obtained in Production Example 2, and carbon dioxide as blowing agent was injected into the autoclave until the pressure in the autoclave reached 4.0 MPa(G) (impregnation pressure). The contents in the autoclave were then maintained at 4.0 MPa(G) for 3 hours. The temperature of the contents in the autoclave was 10°C. The resin particles impregnated with the blowing agent were then transferred to an expanding apparatus, into which air at the temperature shown in Table 2 (expanding temperature) was blown for 20 seconds to obtain expanded beads. The resulting expanded beads were aged in an oven at 60°C for 24 hours and then gradually cooled. The physical properties of the thus obtained polyamide-based resin expanded beads are shown in Table 2. The moisture contents of the polyamide-based resin particles immediately before expansion and the polyamide-based resin expanded beads immediately after the expansion were measured to be both 2.0%.

Comparative Example 3

Polyamide-based resin expanded beads were obtained by the same method as in Example 1, except that the retention time was changed to 15 minutes. The physical properties of the obtained expanded beads are shown in Table 2.

Table 2

| | | | | Example | 1 | 2 | 3 | | | |
|---|---|---|---|---|---|---|---|---|---|---|
| | | | | Comparative Example | | | | 1 | 2 | 3 |
| Resin Particles | | | | Production Method | 1 | 2 | 3 | 1 | 2 | 1 |
| | | | | Polyamide Resin | 5033B | 1030B | E2046 | 5033B | 1030B | 5033B |
| | | End Capping Agent | | Kind | P | P | P100 | P | P | P |
| | | | | Amount [part by weight] | 1 | 1 | 1 | 1 | 1 | 1 |
| Expanded Beads | Production | Expansion | | Expanding Method | 1 | 1 | 1 | 1 | 2 | 1 |
| | | Production Conditions | | Retention Temperature TR [°C] | 137 | 158 | 176 | 139 | - | 137 |
| | | | | Tm -TR [°C] | 60 | 62 | 83 | 58 | - | 60 |
| | | | | Retention Time [min] | 30 | 30 | 30 | 30 | 30 | 15 |
| | | | | Expanding Temperature TF [°C] | 137 | 158 | 176 | 133 | 250 | 137 |
| | | | | Tm - TF [°C] | 60 | 62 | 83 | 64 | -30 | 60 |
| | Physical Properties | | | Crystallite Size [nm] | 12.4 | 13.2 | 14.1 | 8.8 | 6.0 | 9.2 |
| | | | | Moisture Content [% by mass] | 18 | 17 | 18 | 17 | 2 | 18 |
| | | | | Total Heat of Fusion (First Heating DSC) [J/g] | 54 | 74 | 122 | 54 | 45 | 54 |
| | | | | Peak Top Temperature of Endothermic Peak (Second Heating DSC) [°C] | 191 | 217 | 261 | 191 | 217 | 191 |
| | | | | Apparent Density [g/cm$^3$] | 0.10 | 0.095 | 0.12 | 0.19 | 0.84 | 0.1 |
| | | | | Average Cell Diameter [$\mu$m] | 240 | 220 | 230 | 230 | 280 | 240 |
| | | | | Average Cell Wall Thickness [$\mu$m] | 8 | 7 | 9 | 15 | 161 | 8 |
| | | | | Closed Cell Content | 94 | 93 | 92 | 90 | 60 | 92 |
| | | | | Heat Resistance Ratio | 0.29 | 0.30 | 0.20 | 0.12 | 0.10 | 0.14 |

Production of Molded Body and Evaluation of Moldability of Expanded Beads:

The expanded beads obtained in Examples 1 to 3 and Comparative Examples 1 and 2 were subjected to in-mold molding to obtain molded bodies. The in-mold molding was carried out using a plate-forming mold cavity having a length of 300 mm, a width of 300 mm and a thickness of 50 mm. The expanded beads were filled in the mold cavity, and in-mold molding was performed by steam heating to obtain a molded body in a plate form.

The steam heating was performed as follows. Steam was fed for 5 seconds with drain valves of the both sides being opened (purging step). Then, one-way flow heating and full heating steps were carried out. In the one-way flow heating step, steam was fed in one direction at a steam pressure lower by 0.04 MPa(G) than that in the full heating step shown in Table 3 and, subsequently, reversed one-direction flow heating was carried out at a steam pressure lower by 0.02 MPa(G) than that in the full heating step. The full heating step (both-direction flow heating) was then carried out at the steam pressure shown in Table 3. After completion of the heating, the pressure was released and the molded product was cooled with water until a surface pressure thereof reached 0.02 MPa(G). Then, the mold was opened. The molded product was taken out of the mold cavity and aged in an environment at 80°C for 12 hours under the atmospheric pressure, thereby obtaining an expanded beads molded body. The above in-mold molding was repeatedly carried out in three different molding conditions (Conditions 1 to 3) in which different steam pressures (high pressure, medium pressure and low pressure) were used as shown in Table 3. From the molded bodies obtained in different molding conditions, the moldability of the expanded beads was evaluated in terms of shape recoverability, appearance and adhesion property. The results are shown in Table 3. The physical properties (density and closed cell content) of the molded bodies obtained in Condition 2 are also shown in Table 3. In Examples 1 to 3, good molded bodies were found to be obtained without adopting a multi-stage heating in the production of the molded bodies from the expanded beads.

Table 3

| Example | | | | 1 | 2 | 3 | | | |
|---|---|---|---|---|---|---|---|---|---|
| Comparative Example | | | | | | | 1 | 2 | 3 |
| Moldability | Molding Condition 1 (low steam pressure) | Molding Steam Pressure [MPa(G)] | | 0.16 | 0.44 | 0.6 | 0.16 | 0.44 | 0.14 |
| | | Recoverability | | A | A | A | A | A | A |
| | | Appearance | | A | A | A | A | B | A |
| | | Fusion Bonding Property | Fusion bonding ratio [%] | 90 | 90 | 90 | 90 | 20 | 90 |
| | | | Evaluation | A | A | A | A | B | A |
| | | Comprehensive evaluation | | A | A | A | A | B | A |
| | Molding Condition 2 (medium steam pressure) | Molding stem pressure [MPa(G)] | | 0.18 | 0.46 | 0.62 | 0.18 | 0.46 | 0.16 |
| | | Recoverability | | A | A | A | A | A | A |
| | | Appearance | | A | A | A | A | B | A |
| | | Fusion Bonding Property | Fusion bonding ratio [%] | 90 | 90 | 90 | 90 | 20 | 90 |
| | | | Evaluation | A | A | A | A | B | A |
| | | Comprehensive evaluation | | A | A | A | A | B | A |
| | Molding Condition 3 (high steam pressure) | Molding stem pressure [MPa(G)] | | 0.20 | 0.48 | 0.64 | 0.20 | 0.48 | 0.18 |
| | | Recoverability | | A | A | A | B | A | B |
| | | Appearance | | A | A | A | A | B | A |
| | | Fusion Bonding Property | Fusion bonding ratio [%] | 90 | 90 | 90 | 90 | 20 | 90 |
| | | | Evaluation | A | A | A | A | B | A |
| | | Comprehensive evaluation | | A | A | A | B | B | B |
| | Usable steam pressure range [MPa] | | | 0.04 | 0.04 | 0.04 | 0.02 | none | 0.02 |
| Molded Body | Physical Properties | Density [kg/m$^3$] | | 125 | 120 | 145 | 230 | 900 | 125 |
| | | Closed Cell Content [%] | | 92 | 91 | 88 | 84 | 50 | 90 |

It will be understood from the results shown in Table 3 that, with the expanded beads of Examples 1 to 3, good molded products may be produced in a wide range of steam pressure (usable pressure range) and that the molded products are excellent in appearance, fusion-bonding strength between the expanded beads and dimensional stability.

The expanded beads obtained in Example 1 to 3 excel in heat resistance, resistance to compressive deformation, in-mold moldability and solvent resistance and can give an in-mold molded body having excellent heat resistance, excellent solvent resistance and significantly reduced variation in its physical properties such as compressive strength. Additionally, when the expanded particles obtained in Example 1 to 3 or molded bodies thereof were used as a core for a fiber-reinforced composite article (FRP), the core was found to be able to withstand the production conditions at high temperature and pressure and to give an FRP that was free of deformation.

Comparative Example 1 uses a retention temperature higher than that in Example 1. As will be seen in Table 3, since the crystallite size failed to grow in the expanded beads of Comparative Example 1, the steam pressure range that allows appropriate molding (usable steam pressure range) was narrow. When the steam pressure was 0.2 MPa(G), the recoverability was no good.

Comparative Example 2 is an example in which the expanded beads were produced without performing maintenance of the resin particles in a moistened state with heating. Since the crystallite size was failed to grow, the molded product was poor in recoverability and fusion-bonding strength between the expanded beads as compared with the results of Example 2.

Comparative Example 3 is an example in which the retention time is excessively short as compared with that in Example 1. The crystallite size fails to sufficiently grow. Therefore, in Comparative Example 3, the usable steam pressure range was narrower than that in Example 1. Thus, when the steam pressure was 0.2 MPa(G), the shape recoverability in Comparative Example 3 was worse as compared with that in Example 1.

Production of Fiber-Reinforced Composite Article 1:

A fiber-reinforced composite article (FRPC) was produced using each of the molded bodies obtained from the expanded beads produced in Examples 1 to 3 as a core of FRP. As a resin-impregnated fiber sheet, a carbon fiber-epoxy resin prepreg containing 60% by weight of carbon fibers was used. As the resin, an epoxy resin was used. The molded body and a pair of the prepreg sheets were placed in a mold cavity in such a state that the molded body was sandwiched between the prepreg sheets. Then, the molded body and the prepreg sheets in the mold cavity were pressurized at 90°C for 30 minutes and then at 130°C for 1 hour to cure the resin and to fusion bond the molded body to the prepreg sheets, thereby obtaining FRPC composed of a core of mutually fusion-bonded expanded beads and a skin of the fiber-reinforced resin bonded to each of the opposite surfaces of the core. The obtained composite articles were found to be free of protrusions or depressions in their surfaces, uniform in thickness, excellent in dimensional stability, excellent in adhesion between the core and skin and excellent in appearance. Further, even when exposed in a high temperature environment at 110°C, the articles showed excellent uniform flexural modulus.

Production of Fiber-Reinforced Composite Article 2:

The expanded beads obtained in Example 1 in an amount of 56 parts by mass were mixed with 44 parts by mass of a liquid thermosetting resin composition containing an epoxy resin and an amine curing agent to coat each of the expanded beads with the liquid composition. On each of the coated expanded beads were then coated carbon fiber particles having an average length of 0.15 mm to obtain double-coated expanded beads. A flat mold having a mold cavity of a length of 300 mm, a width of 300 mm and a thickness of 50 mm in its closed state was provided. The double-coated expanded beads were filled in the mold cavity which had been opened to have an aperture length in the thickness direction of 67 mm. The mold was then closed so that the double-coated expanded beads were compressed to a thickness of 50 mm (compression rate was 25%). The compressed double-coated expanded beads were then heated at 70°C for 15 minutes to obtain a preform (in-mold molded body) in which the thermosetting resin composition was semi-cured and in which the expanded beads were bonded together with the thermosetting resin serving as an adhesive with gaps being formed therebetween. The thus obtained preform and a pair of the prepreg sheets were placed in a mold cavity in such a state that the preform was sandwiched between the prepreg sheets. A liquid thermosetting resin (epoxy resin) composition was then fed to the mold to fill a gap between the preform and the prepreg sheets therewith and to fill the gaps between the expanded beads in the preform therewith. Then, the contents in the mold cavity were processed in the same manner as described above to obtain FRPC composed of a core of the preform and a skin of the fiber-reinforced resin bonded to the core. The FRPC was found to be free of protrusions or depressions in its surfaces, uniform in thickness, excellent in dimensional stability, excellent in adhesion between the core and skin and excellent in appearance.

The physical properties of the expanded beads shown in Table 2 were measured by the following methods. The physical properties except for moisture content were measured after the following condition adjustment. First, the obtained expanded beads were placed under conditions at a temperature of 60°C for 24 hours, and gradually cooled to 23°C. Subsequently, the resulting expanded beads were left standing under an environment at a temperature of 23°C, a relative humidity of 50% and a pressure of 1 atm for 24 hours for condition adjustment.

Moisture Content:

Immediately after expanding, the expanded beads were randomly selected. After moisture on the surface of the expanded beads was wiped off with a dry cloth, about 0.2 g of the expanded beads were weighed. Subsequently, the expanded beads were heated to 160°C to vaporize internal moisture of the expanded beads using a heating moisture vaporizer. The moisture content was measured through titration (coulometric titration) using a Karl Fischer moisture analyzer (AQ-2200A, manufactured by Hiranuma Sangyo Co., Ltd.).

Crystallite Size:

The crystallite size of the expanded beads was determined by the following method. The expanded beads were sampled and subjected to X-ray diffraction (XRD) method based on a reflection method using an X-ray scattering apparatus "SmartLab SE" (manufactured by Rigaku Corporation). As the detector, a semiconductor primary detector D/teX Ultra 250 was used. A test piece was prepared by filling a test piece holder having a diameter of 24 mm with randomly selected expanded beads as dense as possible without causing overlapping. Empty cell scattering correction was also performed. The one-dimensional X-ray diffraction profile thus obtained was subjected to peak separation into diffraction peaks derived from the crystal and peaks derived from amorphous material, with use of a software (trade name: SmartLab Studio II), assuming that the peak shape was given by a Gaussian function. The full width at half maximum $\beta$ (rad) of a peak having the narrowest peak width among the peaks obtained by the peak separation was calculated to determine the crystallite size D of the expanded beads based on the following formula (2) using the full width half maximum $\beta$. The above measurement was performed for 10 test pieces, and arithmetic means thereof was defined as the crystallite size of the expanded beads.

$$D = \frac{0.9\lambda}{\sqrt{\beta^2 - b^2}\cos\theta} \qquad (2)$$

Total Heat of Fusion Determined from First Heating DSC Curve:

In the measurement, a high-sensitive differential scanning calorimeter "EXSTAR DSC7020" (manufactured by SII Nano Technology Inc.) was used. Based on the heat-flux differential scanning calorimetry in accordance with JIS K7122-1987, a sample of polyamide-based resin expanded beads was heated from 30°C to a temperature 30°C higher than the temperature at the end of a melting peak at a heating rate of 10°C/min so as to obtain a first heating DSC curve. On the resulting DSC curve, a straight line connecting a point at 150°C of the DSC curve to a point indicating the temperature at the end of a melting peak on the DSC curve was drawn. The straight line was defined as base line. The quantity of heat calculated from an area surrounded by the base line and the DSC curve present on the endothermic side than the base line was defined as the total heat of fusion of the first heating DSC curve.

Peak Top Temperature of Melting Peak in Second Heating DSC Curve:

In the measurement, a high-sensitive differential scanning calorimeter "EXSTAR DSC7020" (manufactured by SII Nano Technology Inc.) was used. Based on the heat-flux differential scanning calorimetry in accordance with JIS K7121-1987, a sample of polyamide-based resin expanded beads was heated from 30°C to a temperature 30°C higher than the temperature at the end of a melting peak at a heating rate of 10°C/min, then maintained at that temperature for 10 minutes, then cooled to 30°C at a cooling rate of 10°C./min, and then heated again from 30°C to a temperature 30°C higher than a temperature at the end of a melting peak at a heating rate of 10°C/min to obtain a second heating DSC curve. In the resulting DSC curve, the peak top temperature of the maximum melting peak (endothermic peak) appearing on the DSC curve was defined as the peak top temperature of a melting peak in the second heating DSC curve.
The apparent density, average cell diameter and cell wall thickness of the polyamide-based resin expanded beads were determined by the methods described previously.

Closed Cell Content of Polyamide-Based Resin Expanded Beads:

In accordance with a procedure C described in ASTM-D2856-70, the value of true volume Vx of expanded beads (sum of the volume of resin constituting the expanded beads and the total volume of cells in a portion of closed cells in expanded beads) was measured. In the measurement of the true volume Vx, an air pycnometer "930" manufactured by Beckman-Toshiba Ltd., was used. Subsequently, the closed cell content was calculated by the following formula (1), and the arithmetic average of the 5 times measurement results was determined.

$$\text{Closed cell content (\%)} = (Vx - W/\rho) \times 100/(Va - W/\rho) \qquad (1)$$

In the formula (1):

Vx is a true volume of expanded beads measured by the above method ($cm^3$),

Va is an apparent volume of expanded beads ($cm^3$),

W is a mass of sample for use in measurement of expanded beads (g), and

P is a density of resin constituting expanded beads ($cm^3$).

Heat Resistance:

Heat resistance of the expanded beads was evaluated in terms of a heat resistance ratio of a 5%-compressive stress at a temperature lower by 20°C than the melting point (Tm1) of the polyamide-based resin expanded beads to a 5%-compressive stress at 23°C, i.e., [(compressive stress at (Tm1-20°C)]/[(compressive stress at 23°C)]. The compressive stress was measured using a thermal analysis apparatus (TMA; "TMA 7100" manufactured by Hitachi High-Tech Science Corporation) at compression mode (tip diameter of compression probe: 3.5 mm). Specifically, one expanded bead randomly selected was held in the minor axis direction of the expanded bead under a load of 10 mN with a compression probe, and heated to a predetermined temperature. Then, during isothermal retention at the temperature, pushing at a rate of 1 mm/min was performed to monitor the load of the probe. The stress at a time when the thickness of the expanded bead reached 5% of the thickness of the expanded bead before compressed was recorded. The procedure was repeated three times, and the arithmetic average thereof was defined as the 5%-compressive stress. Using the measured values obtained from the measurement, the heat resistance ratio of a 5%-compressive stress at a temperature 20°C lower than the melting point of the polyamide-based resin expanded beads (Tm1 - 20°C) to a 5%-compressive stress at 23°C was calculated. The procedure was performed for three expanded beads, and the arithmetic average of the heat resistance ratio [(compressive stress at (Tm1-20°C)]/[(compressive stress at 23°C)] was determined for the evaluation of the thermal resistance. When the heat resistance ratio is about 0.2 or more, the heat resistance is evaluated as being good. Incidentally, the melting point of the polyamide-based resin expanded beads is also important to evaluate the heat resistance thereof. The expanded beads having high heat resistance are useful for producing a composite article by compositing (such as by mixing or by laminating) the expanded beads with a thermosetting resin and then curing the thermosetting resin.

The shape recoverability, surface appearance and fusion-bonding property of the molded bodies shown in Table 3 are measured by the following methods.

Recoverability of Expanded Beads Molded Body:

The thicknesses of an end portion (10 mm inside from the end) and a central portion (portion equally dividing in the longitudinal direction and in the cross direction) of the expanded beads molded body were measured. Subsequently, a thickness ratio of the expanded beads molded body ((thickness of central portion of the molded body)/(thickness of the end portion of the molded body) was calculated for evaluation of the shape recoverability according to the criteria shown below. As the thickness ratio increases, the shape recoverability is more excellent and the moldability of the expanded beads is good.

A: Thickness ratio is 0.95 or more.

B: Thickness ratio is less than 0.95.

Surface appearance of Expanded Beads Molded Body:

The surface appearance of the molded body was evaluated from the state of boundaries between expanded beads at the surface of the molded body. As the gap between expanded beads at the surface of the molded body is more filled, the more excellent is the surface appearance thereof and the moldability of the expanded beads is good.

A: The gaps between expanded beads are filled.

B: The gaps between expanded beads are unfilled.

Fusion Bonding Property of Expanded Beads Molded Body:

The fusion bonding property of the molded body was determined based on the proportion (percentage) of the number of expanded beads which underwent material breakage relative to the number of expanded beads when molded body was fractured. Specifically, a test piece (length: 100 mm, width: 100 mm, thickness: thickness of the molded body) was cut out from the expanded beads molded body, and an about 5-mm notch was made in the thickness direction of the test piece with a cutter knife to cause fracture of the test piece from the notch. Subsequently, the number (n) of expanded beads present in the fracture surface of the test piece and the number (b) of the expanded beads subjected to material breakage were counted. The percentage of the number (b) based on the number (n) (fusion bonding ratio) was calculated to evaluate the fusion bonding property of the molded body based on the criteria shown below. As the fusion bonding ratio increases, the more excellent is the fusion bonding properties of the molded body and the moldability of the expanded beads is good.

A: The fusion bonding ratio is 90% or more.
B: The fusion bonding ratio is less than 90%.

Comprehensive Evaluation of Moldability of Expanded Beads:

Moldability of the expanded beads was comprehensively evaluated based on the results of evaluation of recoverability, surface appearance and fusion bonding property of the molded body based on the following criteria:

A: All of the recoverability, surface appearance and fusion bonding property are good (rank A).
B: One or more of the recoverability, surface appearance and fusion bonding property are no good (rank B).

The physical properties (density and closed cell content) of the molded bodies shown in Table 3 were measured by the methods shown below. Before the measurement, the molded body was quiescently placed in the atmosphere at a temperature of 23°C and a relative humidity of 50% for 24 hours.

Density of Molded Body:

A sample (length: 100 mm, width: 100 mm, thickness: 30 mm) was cut out from an expanded beads molded body excluding the skin surface. From the external dimensions of the sample, the apparent volume H of the sample was determined. The total weight W of the sample was divided by the apparent volume H to obtain the density of the molded body (W/H) [kg/m$^3$].

Closed Cell Content of Molded Body:

A sample (length: 30 mm, width: 30 mm, thickness: 30 mm) was cut out from an expanded beads molded body excluding the skin surface. In accordance with a procedure C described in ASTM-D2856-70, the value of true volume Vx of an expanded beads molded body (sum of the volume of resin constituting the expanded beads molded body and the total volume of cells in a portion of closed cells in an expanded beads molded body) was measured. In the measurement of the true volume Vx, an air pycnometer "930" manufactured by Beckman-Toshiba Ltd., was used. Subsequently, the closed cell content was calculated by the following formula (1), and the arithmetic average of the 5 times measurement results was determined.

$$\text{Closed cell content (\%)} = (Vx - W/\rho)\times 100/(Va - W/\rho) \qquad (1)$$

In the formula (1):

Vx is a true volume of expanded beads measured by the above method (cm$^3$),
Va is an apparent volume of expanded beads (cm$^3$),
W is a mass of sample for use in measurement of expanded beads (g), and
P is a density of resin constituting expanded beads (cm$^3$).

**Claims**

1. Use of polyamide-based resin expanded beads for producing a fiber-reinforced composite article that comprises a core, and a skin bonded to at least part of an outer surface of the core and including a fiber-reinforced resin,

   wherein the core includes the polyamide-based resin expanded beads that are bonded together, and
   wherein the polyamide-based resin expanded beads have a cell wall thickness of 5 $\mu$m or more and 80 $\mu$m or less and a crystallite size of more than 10 nm as measured by an X-ray diffraction method.

2. The use according to claim 1, wherein the polyamide-based resin expanded beads have a crystallite size of more than 12 nm as measured by an X-ray diffraction method.

3. The use according to claim 1 or 2, wherein the polyamide-based resin expanded beads have a cell wall thickness of 7 $\mu$m or more and 80 $\mu$m or less.

4. The use according to claim 1 or 3, wherein the polyamide-based resin expanded beads have a total heat of fusion of 40 to 140 J/g as determined from a first heating DSC curve measured in accordance with JIS K7122-1987 by heat-flux differential scanning calorimetry in which a sample of the polyamide-based resin expanded beads is heated at a heating rate of 10°C/min from 30°C to a temperature higher by 30°C than a melting end temperature.

5. The use according to any one of claim 1 to 4, wherein the polyamide-based resin expanded beads have a peak top temperature of a melting peak of 185 to 285°C as determined from a second heating DSC curve measured in accordance with JIS K7121-1987 by heat-flux differential scanning calorimetry in which a sample of the polyamide-based resin expanded beads is heated at a heating rate of 10°C/min from 30°C to a first temperature higher by 30°C than a melting end temperature, then maintained at the first temperature for 10 minutes, then cooled to 30°C at a cooling rate of 10°C/min and then heated again at a heating rate of 10°C/min to a second temperature higher by 30°C than a melting peak end temperature.

6. The use according to any one of claims 1 to 5, wherein the polyamide-based resin expanded beads have an apparent density of 0.01 g/cm$^3$ or more and 0.3 g/cm$^3$ or less.

7. The use according to any one of claims 1 to 6, wherein the polyamide-based resin expanded beads have a closed cell content of 85% or more.

8. The use according to any one of claims 1 to 7, wherein the polyamide-based resin expanded beads have an average cell diameter of 200 $\mu$m or more and 400 $\mu$m or less.

9. The use according to any one of claims 1 to 8, wherein the polyamide-based resin expanded beads are fusion-bonded together to form a molded body as the core.

10. The use according to any one of claims 1 to 8, wherein the polyamide-based resin expanded beads are bonded together with a thermoplastic or thermosetting resin to form a molded body as the core.

11. A method for producing a fiber-reinforced composite article, comprising processing a core precursor, reinforcing fibers and a thermoplastic or thermosetting resin in a mold, said core precursor being either (a) a plurality of polyamide-based resin expanded beads having a cell wall thickness of 5 $\mu$m or more and 80 $\mu$m or less and a crystallite size of more than 10 nm as measured by an X-ray diffraction method or (b) a molded body including a plurality of said polyamide-based resin expanded beads that are bonded together,

    to form a core which includes the molded body when the core precursor is (b) or which includes a molded product in which a plurality of the polyamide-based resin expanded beads are bonded together when the core precursor is (a), and
    to form a skin bonded to an outer surface of the core and including the thermoplastic or thermosetting resin that is cured and impregnated into the reinforcing fibers.

12. The method according to claim 11, wherein the reinforcing fibers and the thermoplastic or thermosetting resin are in the form of a prepreg.

13. The method according to claim 11 or 12, wherein the molded body as the core precursor (b) has interstices formed between the polyamide-based resin expanded beads so that the thermoplastic or thermosetting resin is also impregnated into the interstices during said processing.

14. The method according to any one of claims 11 to 13, wherein, in the molded body as the core precursor (b), the polyamide-based resin expanded beads are fusion-bonded together or bonded together with the thermoplastic or thermosetting resin serving as an adhesive.

15. The method according to any one of claims 11 to 14, wherein the polyamide-based resin expanded beads are those which are recited in any one of claims 2 to 8.

Europäisches
Patentamt

European
Patent Office

Office européen
des brevets

## EUROPEAN SEARCH REPORT

Application Number

**EP 22 21 6704**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DE 10 2017 116896 A1 (ASAHI CHEMICAL IND [JP]) 22 March 2018 (2018-03-22) | 1,3-15 | INV. C08J9/16 |
| Y | * paragraphs [0009] - [0011], [0016] - [0029], [0054] - [0056], [0078] - [0124] * | 2 | B29C44/44 B32B5/18 C08J9/232 |
|  | * examples 1-7 * | | C08J9/236 C08J9/18 |
| Y | US 2021/253819 A1 (HAYASHI TATSUYA [JP]) 19 August 2021 (2021-08-19) | 2 | B32B5/24 |
|  | * examples 1-3; table 2 * |  | ADD. |
|  | * paragraphs [0031] - [0043] * |  | C08J9/12 |

TECHNICAL FIELDS SEARCHED (IPC)

C08J
B32B
B29C

The present search report has been drawn up for all claims

| Place of search | Date of completion of the search | Examiner |
|---|---|---|
| The Hague | 14 July 2023 | Mayer, Anne |

EPO FORM 1503 03.82 (P04C01)

## ANNEX TO THE EUROPEAN SEARCH REPORT
## ON EUROPEAN PATENT APPLICATION NO.

**EP 22 21 6704**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-07-2023**

| Patent document cited in search report | Publication date | Patent family member(s) | | Publication date |
|---|---|---|---|---|
| DE 102017116896 A1 | 22-03-2018 | CN | 107825726 A | 23-03-2018 |
| | | DE | 102017116896 A1 | 22-03-2018 |
| | | JP | 6746446 B2 | 26-08-2020 |
| | | JP | 2018043487 A | 22-03-2018 |
| US 2021253819 A1 | 19-08-2021 | JP | 2021130739 A | 09-09-2021 |
| | | KR | 20210105306 A | 26-08-2021 |
| | | TW | 202132441 A | 01-09-2021 |
| | | US | 2021253819 A1 | 19-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102017116896 A1